# EUROPEAN PATENT SPECIFICATION

(11) **EP 2 853 713 B1**
(45) Date of publication and mention of the grant of the patent: **26.04.2017**
(21) Application number: 14184935.6
(22) Date of filing: 16.09.2014
(51) Int. Cl.: F02B 25/06, F02D 19/06, F02D 41/00

(54) **A large low-speed tubocharged two-stroke internal combustion engine with a dual fuel supply system**
Großer, turbogeladener Zweitakt-Verbrennungsmotor mit niedriger Drehzahl mit System zur Versorgung mit zwei Kraftstoffarten
Grand moteur à combustion interne à deux temps turbochargé à faible vitesse doté d'un système d'alimentation à deux carburants

(30) Priority: 26.09.2013 DK 201300553
(43) Date of publication of application: 01.04.2015
(73) Proprietor: MAN DIESEL & TURBO, FILIAL AF MAN DIESEL & TURBO SE, TYSKLAND, 2450 Copenhagen SV (DK)
(72) Inventor: Jensen, Kim, 2635 Ishoej Landsby (DK)
(74) Representative: Nordic Patent Service A/S

(56) References cited:
- WO-A1-2010/105620
- WO-A2-2012/080568
- FR-A1- 2 777 605
- FR-A1- 2 840 361
- JP-A- H06 123 248
- US-A1- 2011 132 321

## Description

### FIELD OF THE INVENTION

The present invention relates to a dual fuel supply system for a large low-speed uniflow turbocharged two-stroke internal combustion engine with crossheads, in particular to a fuel supply system for a large low-speed uniflow turbocharged two-stroke internal combustion engine with a fuel supply system for fuel oil and a fuel supply system for gas.

### BACKGROUND ART

Large two-stroke engines of the crosshead type are typically used in propulsion systems of large ships or as prime mover in power plants. Typically, these engines are operated with heavy fuel oil or with fuel oil. WO2012080568 discloses an engine according to the preamble of claim 1. Another example of a similar engine is shown in WO 2010/105620 and US 2011/0132321. Recently, there has been a demand for large two-stroke diesel engines to be able to handle alternative types of fuel, such as gas, coal slurry, petroleum coke and the like, in particular gas.

In order to be able to fulfil the requirements from various fuel supply systems, it has proven relevant to ensure maximum flexibility on the engine side.
In case of insufficient flexibility, some service conditions will not be able to exploit the alternative fuel. Typically such situation occurs, if the supply of the alternative fuel, cannot deliver all the fuel required by the engine for the required service operating point (engine load).

In such situations, today's theoretic options are to either temporarily switch completely to the primary fuel oil and to close down the secondary fuel system, or change the ratio between fuel oil and the alternative fuel.

Switching completely to primary fuel represents a challenge from control point of view, because it represents a big discrete step in operating conditions in the combustion chambers. In other words, it is a significant challenge to provide such fuel change in a smooth way. Further, since the alternative fuel consumption is reduced to zero after the switch, the supply system of the alternative fuel must stop some auxiliary equipment. Such stop/start operation is not desirable, especially not for some high pressure gas pumps whose life time is mainly counted in the number of starts and stops.

Changing the ratio between two different fuels also represent a significant challenge, as optimisation of a combustion process that includes two different types of fuel becomes significantly more complicated. The actually obtained final efficiency will vary in time and jeopardize the ability of the control systems to govern power.

US 20110132321 discloses a dual fuel four-stoke internal combustion engine. each cylinder being provided with two fuel injectors, one of the fuel injectors of a cylinder being connected to the one fuel supply system and the other fuel injector of a cylinder being connected to the other fuel supply system. Each cylinder is provided with one fuel injector for the one fuel and one fuel injector for the other fuel. A diagnosis operation is used in order to determine the performance of a particular fuel injector. Hereto, the electronic control unit suspends pumping of fuel into one of the fuel rails and the fuel is injected to a single cylinder or group of cylinders at a time in order to detect a pressure drop following the injection. The other fuel rail pump may continue to supply fuel to the other fuel rail and to the cylinders, and the diagnosis operation is carried out using one injector at the time thereby maintaining engine efficiency.

### DISCLOSURE OF THE INVENTION

On this background, it is an object of the present application to provide a large low-speed turbocharged two-stroke internal combustion engine of the uniflow type with crossheads that overcomes or at least reduces the problems indicated above.

This object is achieved by providing a large low-speed turbocharged two-stroke internal combustion engine of the uniflow type with crossheads, according to claim 1.

By selectively operating a number of cylinders of the plurality of cylinders with the second type of fuel through the secondary fuel supply system and by operating the remaining cylinders of the plurality of cylinders with the first type of fuel via the primary fuel system a significantly increased operational flexibility is obtained. In particular, thereby it becomes possible to reduce the number of cylinders operating on the second type of fuel via the secondary fuel system when the capacity of the secondary fuel system is decreasing and thus to a large extend avoiding the need to be forced to completely shut down the secondary fuel system with all the negative consequences associated with a shutdown. It is also avoided to operate a given cylinder with two types of fuel simultaneously, thus avoiding the complex and challenging optimization of such a dual fuel combustion process.

In an embodiment the primary fuel supply system has a capacity sufficiently large to supply all of the cylinders of the plurality of cylinders with fuel at all operating conditions and wherein the secondary fuel supply system with a capacity that at times is not sufficiently large to supply all of the cylinders of the plurality with fuel at all operating conditions.

In an embodiment the electronic control unit is configured to determine which fraction of the momentary engine power can be produced with the momentarily available capacity of the secondary fuel system, and wherein the electronic control unit is further configured to determine the maximum number of cylinders of the plurality of cylinders that can be operated exclusively with the second type of fuel on the basis of the momentarily momentary available capacity of the secondary fuel system and wherein the electronic control unit is further configured to operate the determined maximum number of cylinders with the second type of fuel.

In an embodiment the electronic control unit is configured to operate all of the cylinders in the plurality with the second type of fuel when the monetary capacity of the secondary fuel system is sufficiently large to cover the whole fuel supply need of the engine at the momentary engine operating condition.

In an embodiment the primary fuel system is used for providing fuel for pilot injection for the second type of fuel delivered by the secondary fuel system. The pilot injection has a fixed small amount. Actual power control is done via the second type fuel.

In an embodiment the electronic control unit is configured to operate some cylinders of the plurality of cylinders with the second type of fuel and to operate the remaining cylinders of the plurality of cylinders with the first type of fuel.

Further objects, features, advantages and properties of the engine according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a front view of a large two-stroke diesel engine according to an example embodiment,
Fig. 2 is a side view of the large two-stroke engine of Fig. 1,
Fig. 3 is a diagrammatic representation the large two-stroke engine according to Fig. 1, and
Fig. 4 is a diagrammatic representation of an example embodiment of a dual fuel system for the engine of Fig. 1.

### DETAILED DESCRIPTION OF PREFERRED EMBODIMENTS

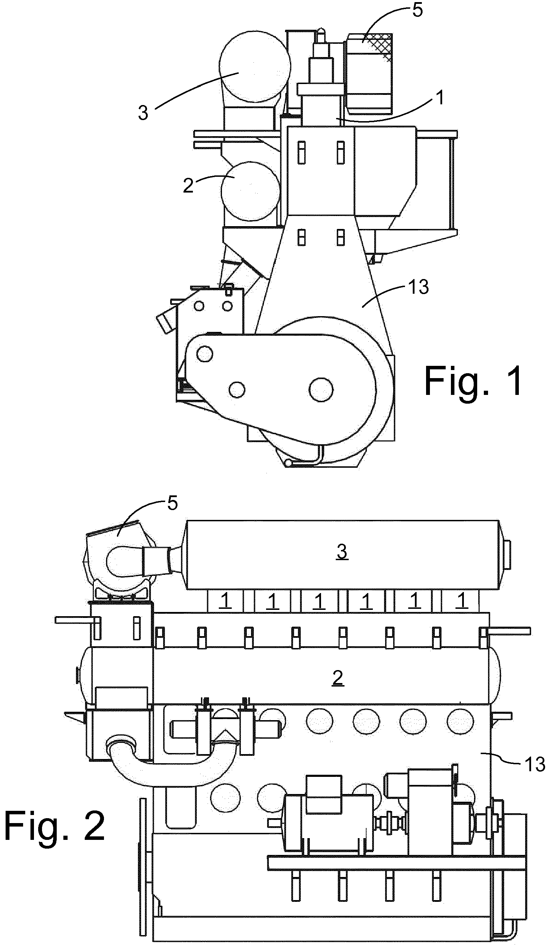

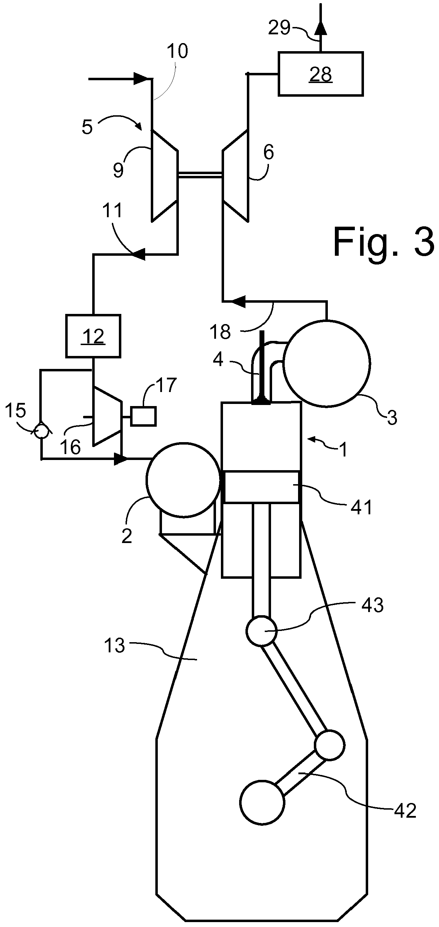

In the following detailed description, the large two-stroke low-speed turbocharged internal combustion (Diesel) engine will be described by the example embodiments. Figs. 1 and 2 show a large low-speed turbocharged two-stroke diesel engine with a crankshaft 42 and crossheads 43. Fig. 3 shows a diagrammatic representation of a large low-speed turbocharged two-stroke diesel engine with its intake and exhaust systems. In this example embodiment the engine has six cylinders 1 in line. Large low-speed turbocharged two-stroke diesel engines have typically between four and fourteen cylinders in line, carried by an engine frame 13. The engine may e.g. be used as the main engine in an ocean going vessel or as a stationary engine for operating a generator in a power station. The total output of the engine may, for example, range from 5,000 to 110,000 kW.

The engine is in this example embodiment a diesel engine of the two-stroke uniflow type with scavenge ports at the lower region of the cylinders 1 and an exhaust valve 4 at the top of the cylinders 1. The scavenge air is passed from the scavenge air receiver 2 to the scavenge ports (not shown) of the individual cylinders 1. A piston 41 in the cylinder 1 compresses the scavenge air, fuel is injected from fuel injection valves in the cylinder cover, combustion follows and exhaust gas is generated. When an exhaust valve 4 is opened, the exhaust gas flows through an exhaust duct associated with the cylinder 1 into the exhaust gas receiver 3 and onwards through a first exhaust conduit 18 to a turbine 6 of the turbocharger 5, from which the exhaust gas flows away through a second exhaust conduit via a economizer 28 to an outlet 29 and into the atmosphere. Through a shaft, the turbine 6 drives a compressor 9 supplied with fresh air via an air inlet 10. The compressor 9 delivers pressurized scavenge air to a scavenge air conduit 11 leading to the scavenge air receiver 2.

The scavenge air in conduit 11 passes an intercooler 12 for cooling the scavenge air - that leaves the compressor at approximately 200 °C - to a temperature between 36 and 80 °C.

The cooled scavenge air passes via an auxiliary blower 16 driven by an electric motor 17 that pressurizes the scavenge air flow in low or partial load conditions of the engine to the scavenge air receiver 2. At higher engine loads the turbocharger compressor 9 delivers sufficient compressed scavenge air and then the auxiliary blower 16 is bypassed via a non-return valve 15.

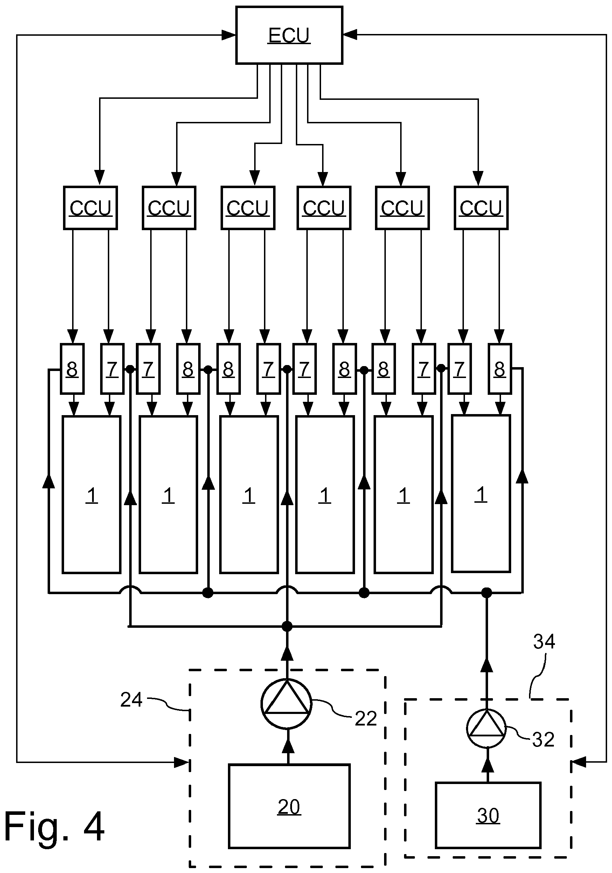

Fig. 4 shows a dual fuel supply system and a plurality of cylinders associated therewith, an engine control unit ECU and a cylinder control unit CCU associated with each cylinder 1. The dual fuel supply system includes two separate fuel systems: a primary fuel system 24 and a secondary fuel system 34.

The primary fuel system 24 includes a primary fuel tank 20 and a primary fuel pump 22 that receives a first type of fuel from the primary fuel tank 20 and delivers pressurized first type fuel to a common rail (a fuel system with individual fuel pumps and individual high pressure fuel pipes can also be used). The primary fuel system 24 further includes a conduit (common rail) that connects the outlet of the primary fuel pump 22 to the primary fuel valves 7 associated with the individual cylinders 1 (in the cylinder cover of the respective cylinder 1). At least one, but preferably two or three primary fuel valves 7 are provided for each cylinder 1 because of the large size of the combustion chamber and the resulting large distances that the atomized fuel needs to travel in order to cover the combustion chamber.

In this embodiment the primary fuel type is heavy fuel oil, but other types of fuel could be used as primary fuel, such as Marine Diesel Oil. The primary fuel tank 20, the primary fuel pump 22, the primary fuel valves 7 and the conduits that connect these components are heated (e.g. by steam tracing) in order to avoid solidification of the heavy fuel (heavy fuel oil is not easily flowing at ambient temperatures).

The secondary fuel system 34 includes a secondary fuel tank 30 and a secondary fuel pump 32 that receives a second type of fuel from the secondary fuel tank 30 and delivers pressurized second type fuel to a common rail. The secondary fuel system 34 further includes a conduit (common rail) that connects the outlet of the secondary fuel pump 32 to the secondary fuel valves 8 associated with the individual cylinders 1 (in the cylinder cover of the respective cylinder 1). At least one, but preferably two or three secondary fuel valves 8 are provided for each cylinder 1 because of the large size of the combustion chamber and the resulting large distances that the fuel needs to travel in order to cover the combustion chamber. In an embodiment a pilot fuel valve (not shown) is associated with each of the secondary fuel valves.

In this embodiment the secondary fuel type is gas, such as e.g. natural gas or petroleum gas, but other types of fuel could be used as secondary fuel. The secondary fuel pump 32 for delivering pressurized gas is sensitive to starts and stops and its lifetime is mainly determined by starts and stops and therefore a continuous operation without unnecessary starts and stops is desirable. Such starts or stops could be induced by issues with the secondary fuel system. An Example is when cargo 'boil off' gas is used. The amount of 'boil off' gas can at times be low(er) due to cargo related issues out of control of the engine operator. Another example is that gas supply systems can include very significant time constants, making it impossible for the supply system to rapidly increase available amount. By configuring the electronic control system as described herein situations where the secondary fuel system has to be complete stopped can be avoided.

The engine control unit ECU controls the operation of the primary fuel system 24, in particular the operation of the primary fuel pump 22 and the engine control unit ECU receives information from the primary fuel system on the operational status thereof, e.g. momentary capacity, fuel temperature and fuel injection pressure.

The engine control unit ECU also controls the operation of the secondary fuel system 34, in particular the operation of the secondary fuel pump 32 and the engine control unit ECU receives information from the secondary fuel system 34 on the operational status thereof, e.g. momentary capacity, fuel temperature and fuel injection pressure. Alternatively, the momentary capacity of the secondary fuel system is manually entered in the ECU.

The electronic control unit ECU is configured to control and operate the primary fuel system 24 and the secondary fuel system 34 with the assistance of cylinder control units CCU. One cylinder control unit CCU is provided for- and associated with each one of the cylinders 1 of the plurality of cylinders 1 of the engine (in this embodiment the plurality of cylinders 1 is six cylinders 1, but it is understood that the plurality of cylinders 1 could comprise any other - higher or lower - number of cylinders 1, although large low-speed two-stroke diesel engines rarely have less than 5 cylinders).

The electronic control unit ECU is configured to operate a selected number of the plurality of cylinders 1 via the respective cylinder control units CCU with the second type of fuel using the secondary fuel system 34 by instructing the respective cylinder control units CCU to activate only the secondary fuel valves 8 and the electronic control unit ECU is configured to operate the remaining cylinders of the plurality of cylinders 1 with the first type of fuel via the primary fuel system 24 by instructing the respective cylinder control units CCU to activate only the primary fuel valves 7.

In an embodiment primary fuel supply system 24 has a capacity sufficiently large to supply all of the cylinders 1 of the plurality of cylinders with fuel at all operating conditions of the engine, i.e. also at maximum engine load.

The secondary fuel supply system 34 has in an embodiment a capacity that at times is not sufficiently large to supply all of the cylinders 1 of the plurality of cylinders 1 with fuel at all operating conditions, i.e. at certain higher engine load levels the secondary fuel system 34 does not have sufficient capacity to fulfill the fuel demand from all of the cylinders 1.

The electronic control unit ECU is configured to determine which fraction of the momentary engine power can be produced with the momentarily available capacity of the secondary fuel system 34, and the electronic control unit ECU is further configured to determine the maximum number of cylinders 1 of the plurality of cylinders 1 that can be operated exclusively with the second type of fuel on the basis of the momentarily momentary available capacity of the secondary fuel system 34 and the electronic control unit ECU is further configured to operate the determined maximum number of cylinders 1 with the second type of fuel using the secondary fuel system 34.

The electronic control unit ECU is configured to operate all of the cylinders 1 of the plurality of cylinders 1 with the second type of fuel when the monetary capacity of the secondary fuel system 34 is sufficiently large cover the whole fuel supply need of the engine at the momentary engine operating condition by instructing all of the cylinder control units CCU only to activate the secondary fuel valves 8.

In an embodiment the primary fuel system 24 is used for providing fuel for pilot injection for assisting ignition of the second type of fuel delivered by the secondary fuel system 34. For pilot injection the electronic control unit ECU is configured to using a fixed predetermined fraction of the amount of second type of fuel that is injected in an injection event for the amount of the first type of fuel that is injected in an associated pilot injection event.

In an embodiment, the electronic control unit ECU is configured to operate some cylinders 1 of the plurality of cylinders 1 with the second type of fuel and to operate the remaining cylinders 1 of the plurality of cylinders 1 with the first type of fuel.

In situations where supply is insufficient for total power output of the engine, only some cylinder control units CCU are given a 'combustion process selection' order, corresponding to maximum use of alternative (second type) fuel, while the remaining cylinder control units CCU are given the 'combustion process selection' order, corresponding to zero use of the alternative (second type) fuel.

As a result, consumption of the alternative (second type) fuel can be adjusted to being close to maximum available supply, while completely stopping the alternative (secondary) fuel supply is avoided, and the possibility to optimize just two individual combustion processes is maintained.

In an embodiment the said electronic control unit ECU,CCU is configured to instruct to select a different cylinder 1 for running on the second type of fuel when one or more of the fuel valves 8 of a cylinder 1 that had been selected for running on the second type of fuel fails. The information on the failure of one or more of the fuel valves 8 of a cylinder can be detected automatically or be entered manually by an operator.

In another embodiment the electronic control unit ECU,CCU is configured to instruct to change operation to the first type of fuel via the primary fuel system 20 and via the primary fuel valves 7 when one or more of the fuel valves 8 of a cylinder 1 that had been selected for running on the second type of fuel fails.

The term "comprising" as used in the claims does not exclude other elements or steps. The term "a" or "an" as used in the claims does not exclude a plurality. The electronic control unit may fulfill the functions of several means recited in the claims.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

## Claims

1. A large low-speed turbocharged two-stroke internal combustion engine of the uniflow type with crossheads (43), said engine comprising:
a plurality of cylinders (1), each cylinder (1) being provided with two or three primary fuel valves (7) and each cylinder (1) being provided with two or three secondary fuel valves (8),
a primary fuel supply system (24) operating with a first type of fuel and comprising a primary fuel tank (20) for said first type of fuel, a primary fuel pump (22) that receives said first type of fuel from the primary fuel tank (20) and delivers pressurized first type fuel to said primary fuel valves (7) for delivering said first type of fuel to the combustion chambers in said cylinders (1),
a secondary fuel supply system (34) operating with a second type of fuel different from said first type of fuel, and comprising a secondary fuel tank (30) for a second type of fuel, a secondary fuel pump (22) that receives said second type of fuel from the secondary fuel tank (20) and delivers pressurized second type fuel to said secondary fuel valves (8) for delivering said second type of fuel to the combustion chambers in said cylinders (1), and
an electronic control unit (ECU,CCU) configured to control and operate said primary fuel system (24) and said secondary fuel system (34),
said electronic control unit (ECU,CCU) being configured to operate a selected number of said plurality of cylinders (1) with said second type of fuel via said secondary fuel system (34) delivering pressurized secondary fuel with said secondary fuel pump (32) to the secondary fuel valves (8) of said selected number of said plurality of cylinders (1) and said electronic control unit (ECU,CCU) being configured to operate the remaining cylinders (1) of said plurality of cylinders (1) with said first type of fuel via said primary fuel system (24) delivering pressurized first fuel with said primary fuel pump (32) to the primary fuel valves (7) of said selected number of said plurality of cylinders (1).

2. An engine according to claim 1, wherein said primary fuel supply system (24) has a capacity sufficiently large to supply all of said cylinders (1) of said plurality of cylinders (1) with fuel at all engine operating conditions and wherein said secondary fuel supply system (34) with a capacity that at times is not sufficiently large to supply all of said cylinders (1) of said plurality with fuel at all engine operating conditions.

3. An engine according to claim 1 or 2, wherein said electronic control unit (ECU,CCU) is configured to determine which fraction of the momentary engine power can be produced with the momentarily available capacity of the secondary fuel system (34), and wherein said electronic control unit (ECU,CCU) is further configured to determine the maximum number of cylinders (1) of said plurality of cylinders (1) that can be operated with said second type of fuel on the basis of said momentarily momentary available capacity of the secondary fuel system (34) and wherein said electronic control unit (ECU,CCU) is further configured to operate said determined maximum number of cylinders (1) with said second type of fuel via said secondary fuel system (34).

4. An engine according to claim 3, wherein said electronic control unit (ECU,CCU) is configured to operate all of the cylinders (1) in said plurality of cylinders (1) with said second type of fuel when the monetary capacity of said secondary fuel system (34) is sufficiently large to cover the whole fuel supply need of said engine at the momentary engine operating condition.

5. An engine according to claim 4, wherein said primary fuel system (24) is used for providing fuel for pilot injection for when a cylinder (1) is operated on said second type of fuel delivered by said secondary fuel system (34).

6. An engine according to claim 5, wherein said electronic control unit (ECU,CCU) is configured for using a fixed amount of the first type of fuel in a pilot injection event.

7. An engine according to any of claims 3 to 6, wherein said electronic control unit (ECU,CCU) is configured to operate some cylinders (1) of said plurality of cylinders (1) with said second type of fuel and to operate the remaining cylinders (1) of said plurality of cylinders (1) with said first type of fuel.

8. An engine according to any of claims 1 to 6, wherein said electronic control unit (ECU,CCU) is configured to instruct to select a different cylinder (1) for running on the second type of fuel when one or more of the fuel valves (8) of a cylinder (1) that had been selected for running on the second type of fuel fails.

9. An engine according to any of claims 1 to 7, wherein said electronic control unit (ECU,CCU) is configured to instruct to change operation to the first type of fuel via the primary fuel system (20) and via the primary fuel valves (7) when one or more of the fuel valves (8) of a cylinder (1) that had been selected for running on the second type of fuel fails.

## Patentansprüche

1. Großer turboaufgeladener, langsamlaufende Zweitaktverbrennungsmotor vom Typ Gleichstrom mit Kreuzköpfen (43), wobei der Motor umfasst:
mehrere Zylinder (1), wobei jeder Zylinder (1) mit zwei oder drei Primärkraftstoffventilen (7) ausgestattet ist und jeder Zylinder (1) mit zwei oder drei Sekundärkraftstoffventilen (8) ausgestattet ist,
ein Primärkraftstoffversorgungssystem (24), das mit einer ersten Kraftstoffart arbeitet und einen Primärkraftstofftank (20) für die erste Kraftstoffart umfasst, eine Primärkraftstoffpumpe (22), welche die erste Kraftstoffart vom Primärkraftstofftank (20) aufnimmt und die druckbeaufschlagte erste Kraftstoffart den Primärkraftstoffventilen (7) zuführt, um die erste Kraftstoffart den Verbrennungskammern in den Zylindern (1) zuzuführen,
ein Sekundärkraftstoffversorgungssystem (34) das mit einer zweiten Kraftstoffart arbeitet, die sich von der ersten Kraftstoffart unterscheidet und einen Sekundärkraftstofftank (30) für eine zweite Kraftstoffart umfasst, eine Sekundärkraftstoffpumpe (22), welche die zweite Kraftstoffart vom Sekundärkraftstofftank (20) aufnimmt und die druckbeaufschlagte zweite Kraftstoffart den Sekundärkraftstoffventilen (8) zuführt, um die zweite Kraftstoffart den Verbrennungskammern in den Zylindern (1) zuzuführen, und
ein elektronisches Steuergerät (ECU, CCU), das konfiguriert ist, das Primärkraftstoffsystem (24) und das Sekundärkraftstoffsystem (34) zu steuern und zu betreiben,
wobei das elektronische Steuergerät (ECU, CCU) konfiguriert ist, eine ausgewählte Anzahl der mehreren Zylinder (1) mit der zweiten Kraftstoffart über das Sekundärkraftstoffsystem (34) zu betreiben, das druckbeaufschlagten Sekundärkraftstoff mit der Sekundärkraftstoffpumpe (32) den Sekundärkraftstoffventilen (8) der ausgewählten Anzahl der mehreren Zylinder (1) zuführt, und das elektronische Steuergerät (ECU, CCU) konfiguriert ist, die verbleibenden Zylinder (1) der mehreren Zylinder (1) mit der ersten Kraftstoffart über das Primärkraftstoffsystem (24) zu betreiben, das druckbeaufschlagten ersten Kraftstoff mit der Primärkraftstoffpumpe (32) den Primärkraftstoffventilen (7) der ausgewählten Anzahl an mehreren Zylindern (1) zuführt.

2. Motor nach Anspruch 1, wobei das Primärkraftstoffversorgungssystem (24) eine Kapazität aufweist, die ausreichend groß ist, um alle der Zylinder (1) der mehreren Zylinder (1) bei allen Motorbetriebszuständen mit Kraftstoff zu versorgen, und wobei das Sekundärkraftstoffversorgungssystem (34) eine Kapazität aufweist, die zeitweise nicht ausreichend groß ist, um alle der Zylinder (1) der mehreren bei allen Betriebszuständen des Motors mit Kraftstoff zu versorgen.

3. Motor nach Anspruch 1 oder 2, wobei das elektronische Steuergerät (ECU, CCU) konfiguriert ist, zu bestimmen, welcher Anteil der augenblicklichen Motorleistung mit der augenblicklich verfügbaren Kapazität des Sekundärkraftstoffsystems (34) erzeugt werden kann, und wobei das elektronische Steuergerät (ECU, CCU) weiter konfiguriert ist, die maximale Anzahl an Zylindern (1) der mehreren Zylinder (1) zu bestimmen, die basierend auf der augenblicklichen augenblicklich verfügbaren Kapazität des Sekundärkraftstoffsystems (34) mit der zweiten Kraftstoffart betrieben werden kann, und wobei das elektronische Steuergerät (ECU, CCU) weiter konfiguriert ist, die bestimmte maximale Anzahl an Zylindern (1) mit der zweiten Kraftstoffart über das Sekundärkraftstoffsystem (34) zu betreiben.

4. Motor nach Anspruch 3, wobei das elektronische Steuergerät (ECU, CCU) konfiguriert ist, alle der Zylinder (1) in den mehreren Zylindern (1) mit der zweiten Kraftstoffart zu betreiben, wenn die monetäre Kapazität des Sekundärkraftstoffsystems (34) ausreichend groß ist, um den gesamten Kraftstoffversorgungsbedarf des Motors bei dem augenblicklichen Motorbetriebszustand abzudecken.

5. Motor nach Anspruch 4, wobei das Primärkraftstoffsystem (24) verwendet wird, um Kraftstoff zur Voreinspritzung bereitzustellen, wenn ein Zylinder (1) mit der zweiten Kraftstoffart betrieben wird, die durch das Sekundärkraftstoffsystem (34) zugeführt wird.

6. Motor nach Anspruch 5, wobei das elektronische Steuergerät (ECU, CCU) zur Verwendung einer festen Menge von der ersten Kraftstoffart bei einem Voreinspritzungsvorgang konfiguriert ist.

7. Motor nach einem der Ansprüche 3 bis 6, wobei das elektronische Steuergerät (ECU, CCU) konfiguriert ist, einige Zylinder (1) der mehreren Zylinder (1) mit der zweiten Kraftstoffart zu betreiben und die verbleibenden Zylinder (1) der mehreren Zylinder (1) mit der ersten Kraftstoffart zu betreiben.

8. Motor nach einem der Ansprüche 1 bis 6, wobei das elektronische Steuergerät (ECU, CCU) zum Anweisen konfiguriert ist, dass ein unterschiedlicher Zylinder (1) zum Arbeiten mit der zweiten Kraftstoffart ausgewählt wird, wenn ein oder mehrere von den Kraftstoffventilen (8) eines Zylinders (1), die ausgewählt wurden, mit der zweiten Kraftstoffart zu arbeiten, versagen.

9. Motor nach einem der Ansprüche 1 bis 7, wobei das elektronische Steuergerät (ECU, CCU) zum Anweisen konfiguriert ist, den Betrieb der ersten Kraftstoffart über das Primärkraftstoffsystem (20) und über die Primärkraftstoffventile (7) zu ändern, wenn ein oder mehrere von den Kraftstoffventilen (8) eines Zylinders (1), die ausgewählt wurden, mit der zweiten Kraftstoffart zu arbeiten, versagen.

## Revendications

1. Grand moteur turbocompressé à combustion interne deux temps à faible vitesse de type flot unique, ou Uniflow, à crosses (43), ledit moteur comprenant :
une pluralité de cylindres (1), chaque cylindre (1) étant pourvu de deux ou trois soupapes de carburant primaire (7) et chaque cylindre (1) étant pourvu de deux ou trois soupapes de carburant secondaire (8),
un système d'alimentation de carburant primaire (24) fonctionnant avec un premier type de carburant et comprenant un réservoir de carburant primaire (20) pour ledit premier type de carburant, et une pompe de carburant primaire (22) qui reçoit ledit premier type de carburant du réservoir de carburant primaire (20) et fournit du carburant sous pression du premier type auxdites soupapes de carburant primaire (7) pour fournir ledit premier type de carburant aux chambres de combustion dans lesdits cylindres (1),
un système d'alimentation de carburant secondaire (34) fonctionnant avec un deuxième type de carburant différent dudit premier type de carburant, et comprenant un réservoir de carburant secondaire (30) pour un deuxième type de carburant, et une pompe de carburant secondaire (22) qui reçoit ledit deuxième type de carburant du réservoir de carburant secondaire (20) et fournit du carburant sous pression du deuxième type auxdites soupapes de carburant secondaire (8) pour fournir ledit deuxième type de carburant aux chambres de combustion dans lesdits cylindres (1), et
une unité de commande électronique (ECU, CCU) configurée pour commander et actionner ledit système de carburant primaire (24) dans ledit système de carburant secondaire (34),
ladite unité de commande électronique (ECU, CCU) étant configurée pour actionner un nombre sélectionné de cylindres de ladite pluralité de cylindres (1) avec ledit deuxième type de carburant via ledit système de carburant secondaire (34) fournissant du carburant secondaire sous pression avec ladite pompe de carburant secondaire (32) aux soupapes de carburant secondaire (8) dudit nombre sélectionné de cylindres de ladite pluralité of cylindres (1), et ladite unité de commande électronique (ECU, CCU) étant configurée pour actionner les cylindres restants (1) de ladite pluralité de cylindres (1) avec ledit premier type de carburant via ledit système de carburant primaire (24) fournissant du carburant primaire sous pression avec ladite pompe de carburant primaire (32) aux soupapes de carburant primaire (7) dudit nombre sélectionné de cylindres de ladite pluralité de cylindres (1).

2. Moteur selon la revendication 1, dans lequel ledit système d'alimentation de carburant primaire (24) a une capacité suffisante pour alimenter en carburant tous lesdits cylindres (1) de ladite pluralité de cylindres (1) dans toutes les conditions de fonctionnement du moteur, et dans lequel ledit système d'alimentation de carburant secondaire (34) a une capacité qui est parfois insuffisante pour alimenter en carburant tous lesdits cylindres (1) de ladite pluralité de cylindres dans toutes les conditions de fonctionnement du moteur.

3. Moteur selon la revendication 1 ou 2, dans lequel ladite unité de commande électronique (ECU, CCU) est configurée pour déterminer quelle fraction de la puissance momentanée du moteur peut être produite avec la capacité momentanément disponible du système de carburant secondaire (34), et dans lequel ladite unité de commande électronique (ECU, CCU) est en outre configurée pour déterminer le nombre maximum de cylindres (1) de ladite pluralité de cylindres (1) qui peuvent être actionnés avec ledit deuxième type de carburant sur base de ladite capacité momentanée momentanément disponible du système de carburant secondaire (34), et dans lequel ladite unité de commande électronique (ECU, CCU) est en outre configurée pour actionner ledit nombre maximum déterminé de cylindres (1) avec ledit deuxième type de carburant via ledit système de carburant secondaire (34).

4. Moteur selon la revendication 3, dans lequel ladite unité de commande électronique (ECU, CCU) est configurée pour actionner tous les cylindres (1) de ladite pluralité de cylindres (1) avec ledit deuxième type de carburant quand la capacité momentanée dudit système de carburant secondaire (34) est suffisante pour couvrir entièrement le besoin d'alimentation de carburant dudit moteur dans la condition de fonctionnement momentanée du moteur.

5. Moteur selon la revendication 4, dans lequel ledit système de carburant primaire (24) est utilisé pour fournir du carburant d'injection pilote quand un cylindre (1) est actionné avec ledit deuxième type de carburant fourni par ledit système de carburant secondaire (34).

6. Moteur selon la revendication 5, dans lequel ladite unité de commande électronique (ECU, CCU) est configurée pour utiliser une quantité fixe du premier type de carburant lors d'une injection pilote.

7. Moteur selon l'une quelconque des revendications 3 à 6, dans lequel ladite unité de commande électronique (ECU, CCU) est configurée pour actionner certains cylindres (1) de ladite pluralité de cylindres (1) avec ledit deuxième type de carburant et pour actionner le reste des cylindres (1) de ladite pluralité de cylindres (1) avec ledit premier type de carburant.

8. Moteur selon l'une quelconque des revendications 1 à 6, dans lequel ladite unité de commande électronique (ECU, CCU) est configurée pour commander la sélection d'un cylindre différent (1) pour qu'il fonctionne avec le deuxième type de carburant quand une ou plusieurs des soupapes de carburant (8) d'un cylindre (1) qui avaient été sélectionnées pour fonctionner avec le deuxième type de carburant tombent en panne.

9. Moteur selon l'une quelconque des revendications 1 à 7, dans lequel ladite unité de commande électronique (ECU, CCU) est configurée pour commander un changement de fonctionnement au premier type de carburant via le système de carburant primaire (20) et via les soupapes de carburant primaire (7) quand une ou plusieurs des soupapes de carburant (8) d'un cylindre (1) qui avaient été sélectionnées pour fonctionner avec le deuxième type de carburant tombent en panne.
